**Europäisches Patentamt**

**European Patent Office**

**Office européen des brevets**

(19)

(11) Veröffentlichungsnummer : **0 526 479 B1**

(12) ## EUROPÄISCHE PATENTSCHRIFT

(45) Veröffentlichungstag der Patentschrift :
**16.02.94 Patentblatt 94/07**

(51) Int. Cl.$^5$ : **G01N 27/407**

(21) Anmeldenummer : **91907142.3**

(22) Anmeldetag : **17.04.91**

(86) Internationale Anmeldenummer :
**PCT/DE91/00313**

(87) Internationale Veröffentlichungsnummer :
**WO 91/16624 31.10.91 Gazette 91/25**

(54) **VERFAHREN ZUR BESTIMMUNG VON GASKONZENTRATIONEN UND GASSENSOR MIT FESTEM ELEKTROLYTEN.**

(30) Priorität : **26.04.90 DE 4013382**

(43) Veröffentlichungstag der Anmeldung :
**10.02.93 Patentblatt 93/06**

(45) Bekanntmachung des Hinweises auf die
Patenterteilung :
**16.02.94 Patentblatt 94/07**

(84) Benannte Vertragsstaaten :
**CH DE FR GB IT LI NL**

(56) Entgegenhaltungen :
**DE-A- 3 036 824**
**GB-A- 2 228 327**
**US-A- 4 227 984**
**US-A- 4 744 954**

(73) Patentinhaber : **Hartmann & Braun
Aktiengesellschaft
D-60484 Frankfurt am Main (DE)**

(72) Erfinder : **HIELSCHER, Bernd
Homburger Str. 129
D-6368 Bad Vilbel (DE)**
Erfinder : **HORN, Bertold
Lilienweg 15
D-6382 Friedrichsdorf (DE)**
Erfinder : **SCHMÄH, Martin
Sandplackenstr. 26
D-6000 Frankfurt 90 (DE)**

(74) Vertreter : **Meissner, Walter, Dipl.-Ing. et al
Patentanwälte Meissner, Walter, Dipl.-Ing.
Meissner, Peter, Dipl.-Ing. Presting Hans-J.
Dipl.-Ing. Herbertstrasse 22
D-14193 Berlin (DE)**

EP 0 526 479 B1

## Beschreibung

Eine Vielzahl von Ausführungsformen elektrochemischer Gas-Sensoren basiert auf wässrigen Elektrolyten oder auf polymeren Festelektrolyten (US-PS 42 27 984). Die Materialien letzterer sind wasserhaltige Protonenleiter, d.h. das überführte Ion ist H+.

Durch die Verwendung eines wässrigen oder wasserhaltigen Elektrolyten wird der Einsatzbereich für die Sensoren stark eingeschränkt. Denn schon bei Temperaturen unter 100 °C verdampft das Wasser im Elektrolyten und dessen Leitfähigkeit nimmt stark ab.

Ein weiterer Nachteil dieser Gas-Sensoren mit wasserhaltigem Elektrolyten ist der hohe konstruktive Aufwand bei der Miniaturisierung bzw. bei der Verwirklichung einer kompakten Bauweise (GB-OS 22 28 327 bzw. WO-A-89/08249).

Der Meßeffekt solcher Sensoren beruht auf der elektrochemischen Oxidation bzw. Reduktion der nachzuweisenden Gaskomponente und der Bildung von Protonen bzw. Wasser an einer Meß- bzw. einer Gegenelektrode. Die Selektivität dieser Sensoren ist daher durch die Oxidations- bzw. Reduktionspotentiale der nachzuweisenden Gasspezies eingeschränkt.

Es ist bekannt, daß auch mit ionenleitenden Festkörper-Materialien unter bestimmten Bedingungen Konzentrationen von Gasen in Gasgemischen gemessen werden können (H. Rickert, "Feste Ionenleiter - Grundlagen und Anwendung", Angew. Chem. 90, Seiten 38-48, 1978). Dazu wird eine galvanische Kette bestehend aus zwei Elektroden und einem Festelektrolyten aufgebaut, wobei eine Elektrode, die sogen. Meßelektrode, dem in seiner Zusammensetzung unbekannten Gas ausgesetzt ist und eine zweite Elektrode durch entsprechende Maßnahmen unter konstanten Bedingungen gehalten wird.

Zur Erzielung eines geeigneten Meßsignales werden im wesentlichen zwei Meßprinzipien ausgenutzt:

a) die möglichst stromlose Messung der Spannung zwischen den Elektroden (potentiometrische Messung) oder

b) die Messung des Stromes zwischen den Elektroden bei vorgegebener Spannung (potentiostatische bzw. amperometrische Messung).

Ein bekanntes Beispiel für das Prinzip a) ist die Lambda-Sonde mit Zirkondioxid $ZrO_2$ als Festelektrolyt. Diese wird eingesetzt, um die Konzentration von Sauerstoff zu bestimmen. Die Gegenelektrode ist dem im allgemeinen relativ konstanten Sauerstoffpartialdruck der Luft ausgesetzt.

Solche Messungen lassen sich auch dann durchführen, wenn der Festelektrolyt nicht direkt die Ionen des nachzuweisenden Gases überführen kann (DE PS 29 26 172 C2). Desweiteren muß die Gegenelektrode nicht in jedem Fall einem Referenzgas ausgesetzt werden, sondern kann auch aus einem Material bestehen, welches das Ion des Festelektrolyten in Form einer chemischen Verbindung oder elementar enthält. Zur Gaspartialdruck-Bestimmung mit einer derartigen galvanischen Kette nutzt man die chemische Reaktion des zu detektierenden Gases mit dem elektroaktiven Ion des Festelektrolyten. Dabei wird eine elektrische Spannung (EMK) zwischen Referenz- und Meßelektrode - an der die chemische Reaktion abläuft - gemessen. Je höher der Partialdruck des mit dem Ion reagierenden Gases, desto größer ist die elektrische Spannung.

Die Partialdruckabhängigkeit folgt der Nernstschen Gleichung:

$$EMK = E_0 + (R * T)/(n * F) * \ln(p_{Gas}) + E_r + Z$$

Darin ist

R        die allgemeine Gaskonstante
T        die absolute Temperatur,
F        die Faradaykonstante,
n        die Zahl der transferierten Elektronen,
$p_{Gas}$        der Partialdruck des zu messenden Gases.

Der Parameter $E_r$ enthält den partialdruckunabhängigen Anteil der Gegenelektrode und der Parameter Z faßt alle Terme zusammen, die von anderen Gaskomponenten herrühren. In der Größe $E_0$ ist die für die Reaktion des Gases mit dem Ion des Festelektrolyten berechnete Gibbssche Reaktionsenthalpie über die Beziehung

$$G/(n * F) = - E_0$$

enthalten. Die Größe von G gibt Auskunft über die thermodynamische Stabilität einer Verbindung. Das Ion des Festelektrolyten kann mit verschiedenen Gasen unterschiedlich stabile Verbindungen eingehen.

So bildet das Natriumion, welches z.B. durch den Festelektrolyten Na-ß-Alumina überführt werden kann, in Anwesenheit von Sauerstoff mit Schwefeldioxid Natriumsulfat, mit Kohlendioxid Natriumkarbonat usw. Im einfachsten Fall bildet sich die Verbindung mit der größten Reaktionsenhalpie - die in diesem Beispiel Natriumsulfat hat - unter den durch das Gasgemisch gegebenen Möglichkeiten.

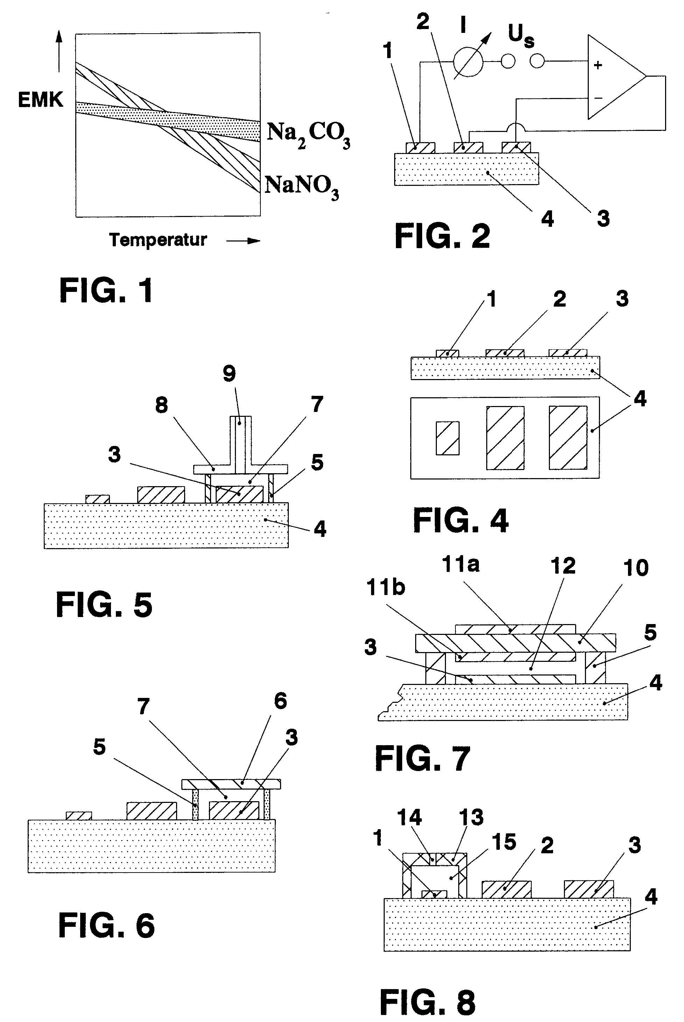

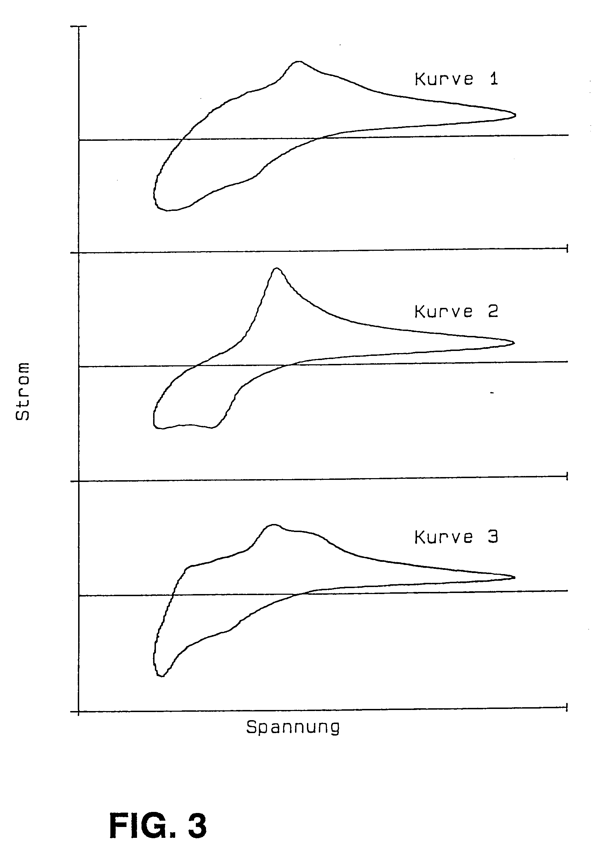

In FIG.1 ist der prinzipielle Temperaturverlauf der EMK nach der Nernstschen Gleichung für die Bildung der Metallsalze Natriumkarbonat $Na_2CO_3$ und Natriumnitrat $NaNO_3$ dargestellt. Dabei zeigt die jeweils obere Kurve die EMK für einen hohen Partialdruck und die jeweils untere Kurve die EMK für einen niedrigeren Partialdruck von $CO_2$ und $NO_2$. Es gibt demnach einen Temperaturbereich und einen Partialdruckbereich, in dem durch einen bestimmten Partialdruck $NO_2$ eine EMK an einer Na-Kette hervorgerufen wird, die auch einer EMK durch einen bestimmten Partialdruck $CO_2$ zugeordnet werden kann.

Eine potentiometrische Gaspartialdruckbestimmung mit einer galvanischen Na-Kette ist nach dieser Betrachtung für $NO_2$ oder $CO_2$ bei gleichzeitiger Anwesenheit beider Gase nur sehr eingeschränkt möglich. Die thermodynamischen Berechnungen für andere Metallsalze, wie z.B. Ag-Salze ergeben ebenfalls Temperatur- und Partialdruckbereiche, wo mehrere Reaktionen konkurrierend miteinander ablaufen können, da ihre Reaktionsenthalpien bzw. EMK-Werte identisch sind. Die EMK-Messung läßt dann keinen eindeutigen Schluß auf den Gaspartialdruck zu.

Zusätzlich zu diesen thermodynamisch bedingten Querempfindlichkeiten sind manche Reaktionen gegenüber anderen durch ihre Kinetik bevorzugt. So sind 2-Teilchen-Reaktionen wahrscheinlicher als 3- oder 4-Teilchen-Reaktionen. Zusätzliche kinetische Reaktionshemmungen lassen chemische Reaktionen mit kleineren Reaktionsenthalpien u.U. vor Reaktionen mit größeren Reaktionsenthalpien ablaufen. Aus diesen genannten Gründen sind die EMK-Werte bei Vorliegen mehrerer Gaskomponenten im allgemeinen nicht mit dem tatsächlichen Partialdruck der zu detektierenden Komponente korrelierbar.

Um die Selektivität dennoch zu erhalten, ist bereits vorgeschlagen worden, die Meßelektrode in das Metallsalz einzubetten, das sich aus dem Ion des Festelektrolyten und der nachzuweisenden Komponente bildet (Europäische Patentschrift 0 182 921 B1). Die Nachteile dieser Anordnung sind große Zeitkonstanten auf Konzentrationswechsel, Drift des Meßsignales und die Einschränkung, mit einem Sensor nur eine Komponente messen zu können.

Ein anderer Weg zur Selektivität wurde für elektrochemische Gas-Sensoren durch Anwendung der zyklischen Voltammetrie beschritten. Bei dieser Klasse von Gas-Sensoren tritt die nachzuweisende Gasspezies durch eine Membran in den Elektrolyten ein.

Der Elektrolyt besteht aus einer Substanz, die eine gute Löslichkeit für die nachzuweisende Gasspezies besitzt. Durch Anlegen einer Spannung an den Elektroden wird diese oxidiert oder reduziert. Die Produkte dieser Redoxreaktion werden ebenfalls im Elektrolyten gelöst und dadurch von der Meßelektrode wieder entfernt.

Unterschiedliche Gasspezies, die im Elektrolyten gelöst werden, können bei verschiedenen Spannungen elektrochemisch umgesetzt werden. Wird die Spannung zeitlich variiert, z.B. ein dreieckförmiges Signal angelegt und dabei der Strom gemessen, lassen sich Strom-Spannungskurven ermitteln, die einen erhöhten Strom bei den Redoxpotentialen der einzelnen Gasspezies aufweisen (vgl. dazu: J. D. Zook and H. V. Venkatasetty "Nonaqueous Electrochemical Gas Sensors" in Transducers 1985, International Conference on Solid-State Sensors and Actuators, S. 326 bis 329; H. Gayet and L. T. Yu "Application of Linear Potential Sweep Voltammetry to make Gas Captors", in Sensors and Actuators, 15, 1988, 387-398; J. Bergman "The Voltammetry of some Oxidising and Reducing Toxic Gases direct from the Gas Phase, at Gold and Platinum Metallised-Membrane Electrodes in Acid and Alkali", in J. Electroanal. Chem., 157, 1983, 59-73).

Für die Übertragung dieses Verfahrens auf Festelektrolyte, die im Gegensatz z.B. zum sauerstoffleitenden Zirkondioxid das nachzuweisende Gas nicht überführen, sind folgende Unterschiede wesentlich:

- Die oben beschriebene Löslichkeit der nachzuweisenden Gaskomponenten ist in diesen Festelektrolyten nicht gegeben. Dadurch ist auch die Oxidation bzw. Reduktion eines (elektrisch neutralen) Gasteilchens direkt aus der Gasphase, verbunden mit einem Elektronenübertrag an einer Elektrode aufgrund der Ladungserhaltung, nicht möglich. Denn dazu müßte aus dem elektrisch neutralen Gasteilchen ein Ion entstehen, welches zur Stabilisierung eine zweite, entgegengesetzt geladene Ladungsträgersorte benötigt. Diese ist in den genannten Elektrolyten der herkömmlichen elektrochemischen Gas-Sensoren als $OH^-$ oder $H_3O^+$ -Ionen oder auch als Fremdionen in ausreichender Zahl vorhanden.
- Das elektroaktive Ion des Festelektrolyten kann diese Aufgabe an der Dreiphasengrenze Festelektrolyt/Elektrode/Gas nur dann übernehmen, wenn es aus dem Festelektrolyten austritt und mit dem Gasteilchen eine Verbindung eingeht.
- Bei Verwendung von Festelektrolyten, die für keine der beteiligten Gaskomponenten bzw. deren Reaktionsprodukte eine Mobilität oder Löslichkeit besitzen, muß eine Redoxreaktion mit dem nachzuweisenden Gasteilchen an der Dreiphasengrenze Elektrolyt/Elektrode/Gas stattfinden.
- Zusätzlich muß aus dieser Reaktion eine Verbindung resultieren, die bei den vorliegenden Festelektrolyten, deren elektroaktive Ionen Metallionen sind, ein Metallsalz ist. Das Metallsalz wird bei entsprechender Polarisation auf der Elektrode abgeschieden und kann bei umgekehrtem Spannungsverlauf wieder zersetzt werden. Die Menge an gebildetem Metallsalz ist, wenn nicht der Strom der Ionen im Elektrolyten selbst begrenzend wirkt, im allgemeinen linear vom Partialdruck des umgesetzten Gases abhängig.
- Im Gegensatz zu den Elektrolyten, die eine Löslichkeit für das elektrochemische Reaktionsprodukt besitzen, muß bei den kationischen Festelektrolyten das Reaktionsprodukt elektrochemisch wieder zersetzt werden.

Wichtige meßtechnische Anforderungen an einen Gas-Sensor sind neben hoher Selektivität, ein stabiles und reproduzierbares Meßsignal, eine schnelle Ansprechzeit auf Konzentrationswechsel sowie eine hohe Lebensdauer. Um diese Anforderungen im vorliegenden Fall zu erfüllen, muß sichergestellt werden, daß die Meßelektrode während eines jeden Zyklus wieder vollständig regeneriert wird. Dies bedeutet, das gebildete Metallsalz muß unabhängig von der jeweils anstehenden Gaskonzentration vollständig zersetzt werden. Andernfalls wächst die Metallsalzschicht während des Meßbetriebes unkontrolliert an, was die Ansprechzeit, die Größe des Meßsignals und die Empfindlichkeit des Gas-Sensors verändert.

Es erweist sich bei der Zersetzung des Metallsalzes nicht ohne weiteres als taugliches Verfahren, die Ladungsmengen für die Bildung und die Zersetzung auszugleichen. Da die Überführungszahl für elektronische Ladungsträger in den hier vorliegenden Festelektrolyten - im Gegensatz zu wässrigen Elektrolyten - verschieden von Null ist, stört ein elektronischer Beitrag dieses Ladungsgleichgewicht.

Lediglich mit einem rechnerischen Verfahren die Veränderung der Meßelektrode zu kompensieren, wie dies in der DE-OS 30 36 824 für elektrochemische Sensoren zur Sauerstoffbestimmung des Blutes vorgeschlagen wird, reicht bei den hier vorliegenden Festelektrolyt-Sensoren nicht aus. Denn durch ein unkontrolliertes Anwachsen der Metallsalzschicht, z.B. durch die Verbindungsbildung mit einer bestimmten Gaskomponente, würde die Empfindlichkeit auf eine andere Gaskomponente herabgesetzt werden.

Im vorliegenden Falle haben die Untersuchungen ergeben, daß die Regenerierbarkeit der Meßelektrode dann gegeben ist, wenn die Schicht des Metallsalzes eine äquivalente Ladungsdichte von $2*z$ mAs/cm$^2$ nicht überschreitet; die Größe z gibt die Anzahl der Ladungen pro Ion an.

Der Erfindung liegt die Aufgabe zugrunde, ein Verfahren zur Bestimmung von Gaskonzentrationen in einem Gasgemisch mit einem Festelektrolyten anzugeben, welches die genannten Nachteile durch Verhinderung einer permanenten Metallsalzschicht umgeht und die Selektivität auf mehrere Gaskomponenten ausdehnt. Der Erfindung liegt ferner die Aufgabe zugrunde, einen Gas-Sensor zu entwickeln, der zur Durchführung dieses Verfahrens geeignet ist.

Die Lösung der Aufgabe gelingt mit den in den Ansprüchen 1 bzw. 10 angegebenen kennzeichnenden Merkmalen. Vorteilhafte Ausgestaltungen der Erfindung sind in den Unteransprüchen angegeben.

Die Erfindung wird anhand der in den Figuren 2 bis 8 dargestellten Ausführungsbeispielen näher erläutert. Es zeigen

| | |
|---|---|
| FIG.2 | den prinzipiellen Aufbau eines Gas-Sensors mit einer Meßschaltung zur Bestimmung von Gaskonzentrationen; |
| FIG.3 | Strom-Spannungskurven verschiedener Meßgase, gemessen mit einem Gas-Sensor mit Festelektrolyten; |
| FIG.4 bis FIG.8 | verschiedene Ausführungsformen von Gas-Sensoren. |

FIG.2 zeigt den prinzipiellen Aufbau eines Gas-Sensors - im folgenden kurz als Sensor bezeichnet - zur Durchführung eines Meßverfahrens, welches die eindeutige Bestimmung der Konzentrationen von verschiedenen Gasen in einem Gasgemisch erlaubt, ohne daß sich dabei eine der beteiligten Komponenten (elektroaktives Ion des Festelektrolyten, Produkte der Reaktion des Ions mit den Gaskomponenten) am Sensor anreichert und somit die meßtechnischen Eigenschaften verändert. Dabei wird zwischen zwei der auf den Festelektrolyten 4 aufgebrachten Elektroden, der Meßelektrode 1 und der Gegenelektrode 2, eine Spannung $U_S$ angelegt, deren Größe bezüglich einer dritten, stromlosen Referenzelektrode 3 so geregelt wird, daß an der Meßelektrode 1 sich die besagte Spannung $U_S$ einstellt.

Dies läßt sich beispielsweise mit einer bekannten potentiostatischen Verstärkerschaltung erreichen (vergleiche dazu in "Electrochemical Methods" von J. Bard, R. Faulkner, John Wiley, New York 1980, S.563). Dabei wird das Potential an der Referenzelektrode 3 als Bezugspotential gewählt, bzgl. dem die Sollspannung $U_S$ angelegt wird. Dazu wird ein Strom durch die Gegenelektrode 2 über die Meßelektrode 1 getrieben. Dieser Strom, der u.a. durch die elektrochemischen Prozesse an der Meßelektrode 1 bestimmt ist, wird über ein Strom-Meßgerät in Abhängigkeit von der Spannung $U_S$ aufgezeichnet. Der Strom wird im folgenden Meßstrom I genannt.

Die Spannung $U_s$ setzt sich aus einem statischen Anteil $U_{dc}$ und einem zeitlich periodischen Anteil $U_{ac}$ zusammen.

Die Tatsache, daß die Ionen des Festelektrolyten mit verschiedenen Gaskomponenten thermodynamisch unterschiedlich stabile Verbindungen eingehen, läßt sich zur selektiven Bestimmung der Konzentrationen verschiedener Gaskomponenten in einem Gasgemisch nutzen.

Zur Veranschaulichung sind in FIG.3 beispielhaft Strom-Spannungskurven für verschiedene Meßgase gezeigt. Kurve 1 zeigt die Reaktion auf Begasung mit einem Meßgas, das zwei Komponenten in einer bestimmten Konzentration enthält, die mit dem elektroaktiven Ion des Festelektrolyten reagieren. Kurve 2 zeigt die Reaktion auf eine Konzentrationserhöhung der ersten Komponente und Kurve 3 zeigt die Reaktion auf eine Erhöhung der zweiten Komponente.

Eine Erhöhung der ersten Komponente führt zu einer signifikanten Änderung des Strom-Spannungsverlaufs und ebenso eine Erhöhung der zweiten Komponente. Dabei treten die Änderungen durch die Komponente 1 (Kurve 2) bei anderen Spannungen auf als die Änderungen durch die Komponente 2 (Kurve 3). Durch die beiden unterschiedlichen Spannungen, bei denen die erste und die zweite Komponente Stromänderungen hervorrufen, sind die Konzentrationen beider Komponenten getrennt meßbar.

Zur Steigerung der Empfindlichkeit und Erhöhung der Selektivität des Verfahrens, wird dem zeitlich periodischen Spannungsanteil $U_{ac}$ eine höherfrequente Wechselspannung mit kleinerer Amplitude als die von $U_{ac}$ überlagert. Die dadurch entstehende Strommodulation wird unter einer festen Phasenbeziehung zur anregenden höherfrequenten Wechselspannung gleichgerichtet und ausgewertet.

Es wurden verschiedene Maßnahmen gefunden, die Metallsalzschicht unabhängig von der Konzentration auf eine maximale, der Ladungsdichte von $2*z$ mAs/cm$^2$ äquivalente Menge, zu begrenzen. Dabei wird während einer Periode der angelegten zeitlich periodischen Spannung $U_{ac}$, der Betrag des Integrals des positiven Meßstromes I$^+$, d.h. wenn die Ionen von der Gegenelektrode zur Meßelektrode fließen, gleich bzw. aufgrund der elektronischen Teilleitfähigkeit, kleiner als der Betrag des Integrals des negativen Meßstromes I$^-$, d.h. wenn die Ionen in umgekehrter Richtung von der Meßelektrode zur Gegenelektrode fließen, gehalten.

Die Maßnahmen sind:

1. In einem definierten Potentialbereich wird der positive Meßstrom I$^+$ oder in einem anderen definierten Potentialbereich der negative Meßstrom I$^-$ integriert und die aus dem Integral resultierende positive oder negative Ladung mit einem Sollwert verglichen. Bei einer Abweichung wird der statische Spannungsanteil $U_{dc}$ so angepaßt, daß die Abweichung zu Null wird. Dadurch läßt sich der statische Spannungsanteil $U_{dc}$ als Meßgröße heranziehen. Es wurde ein logarithmischer Zusammenhang zwischen $U_{dc}$ und dem Partialdruck des Gases gefunden.

2. Durch Änderung der Frequenz f des zeitlich periodischen Spannungsanteiles $U_{ac}$ wird im selben Maße das Zeitintervall für die Bildung des Metallsalzes verändert. Wird die Frequenz f des zeitlich periodischen Spannungsanteiles so angepaßt, daß das Integral des positiven Meßstromes I$^+$ oder das Integral des negativen Meßstromes I$^-$ nicht von einem festgelegten Sollwert abweicht, so findet man einen (in erster Näherung) linearen Zusammenhang zwischen der Frequenz f und dem Partialdruck des Gases.

3. Nur die Gasmenge, die während der Bildung des Metallsalzes auf die Meßelektrode trifft, steht für die Abreaktion zur Verfügung. Wird vor der Meßelektrode eine Öffnung für den Gaszutritt, beispielsweise in der Form eines kleinen Loches, angebracht, die den geometrischen Weg bzw. den Querschnitt für den Gastransport zur Meßelektrode definiert, läßt sich darüber der Gasstrom begrenzen. Dies wiederum führt zu einer Begrenzung der Bildung des Metallsalzes. Eine entsprechende Anordnung ist in FIG.8 dargestellt.

Ein Gas-Sensor zur Durchführung des Verfahrens, im folgenden potentiodynamisches Meßverfahren genannt, besteht aus einem Festelektrolyten, dessen Leitfähigkeit durch eines der folgenden Ionen hervorgerufen wird: Ba$^{++}$, Pb$^{++}$, Cd$^{++}$, Ca$^{++}$, K$^+$, Cu$^{++}$, Li$^+$, Mg$^+$, Na$^+$, Ag$^+$, Sr$^{++}$. Auf der Oberfläche des Festelektrolyten sind mindestens 3 Elektroden aufgedruckt, -gedampft, -gesputtert oder elektrochemisch abgeschieden, wobei - je nach gewählter Sensoranordnung - eine oder mehrere der Elektroden durch einen entsprechenden Aufbau vor Reaktionen mit den Gaskomponenten geschützt sind. Die Elektroden sind entweder beidseitig oder einseitig auf dem Festelektrolyten aufgebracht.

In FIG.4 ist ein Sensor mit drei Elektroden gezeigt, die einseitig auf den Festelektrolyten 4 aufgebracht sind. Die Meßelektrode 1, die Gegenelektrode 2 und die Referenzelektrode 3 sind identisch präpariert und dem Meßgas ausgesetzt. Die Elektroden bestehen aus einem gegenüber dem Gas inerten elektronischen Leiter, wie z.B. Platin.

In FIG.5 ist ein Sensor mit drei Elektroden gezeigt, die einseitig auf den Festelektrolyten 4 aufgebracht sind. Die Meßelektrode 1 und die Gegenelektrode 2 sind identisch präpariert und bestehen aus einem inerten elektronischen Leiter. Der durch einen Deckel 8 verkapselten Referenzelektrode 3 wird durch eine oder mehrere Kapillaren 9 ein Referenzgas zugeführt, das mit dem Meßgas nicht identisch sein muß.

In FIG.6 ist ein Sensor mit drei Elektroden gezeigt, die einseitig aufgebracht sind. Die Meßelektrode 1 und die Gegenelektrode 2 sind identisch präpariert und bestehen aus einem inerten elektronischen Leiter. Die Referenzelektrode 3 ist durch eine Verkapselung vor Reaktionen mit dem Meßgas geschützt. Die Verkapselung besteht aus einem gasdichten Feststoff 6, welcher durch ein elektrisch isolierendes Material 5, z.B. Glas oder Kunststoff, mit dem Festelektrolyten 4 verbunden ist. Zwischen der Referenzelektrode 2 und Feststoff 6 entsteht durch diesen Aufbau ein Hohlraum 7. Die Referenzelektrode 3 besteht aus einem Material, welches das leitfähige Ion des Festelektrolyten 4 elementar oder als chemische Verbindung enthält.

In FIG.7 ist der Ausschnitt eines Sensors mit drei Elektroden gezeigt, welcher den Unterschied zu den bisherigen Sensoranordnungen deutlich macht. Die Meßelektrode und die Gegenelektrode sind wieder identisch präpariert und bestehen aus einem inerten elektronischen Leiter. Die Referenzelektrode 3 ist mit einem sauerstoffionenleitenden Material 10 abgedeckt, das die Elektroden IIa und IIb aus einem inerten elektronischen Leiter trägt, wobei die Elektrode IIa dem Meßgas zugewandt und die Elektrode IIb der Referenzelektrode 3 zugewandt ist.

Die Referenzelektrode 3 ist durch eine Verkapselung vor Reaktionen mit dem Meßgas geschützt. Die Verkapselung besteht hier aus dem sauerstoffionenleitenden Material 10, welches durch ein elektrisch isolierendes Material 5, z.B. Glas oder Kunststoff, mit dem Festelektrolyten 4 verbunden ist. Zwischen der Referenzelektrode 3 und dem sauerstoffionenleitenden Material 10 entsteht ein Hohlraum 12.

Über die beiden Elektroden 11a und 11b wird eine Spannung an das sauerstoffionenleitende Material angelegt, um Sauerstoff zu pumpen und dessen Partialdruck an der Referenzelektrode 3 innerhalb des Hohlraumes 12 zu definieren. Dadurch kann bei einem geeigneten Festelektrolyten über die Bildung eines Metalloxids auf der Referenzelektrode 3 das Referenzpotential definiert werden.

In Fig. 8 ist ein Sensor mit drei Elektroden gezeigt, die einseitig auf einen Festelektrolyten 4 aufgebracht sind. Die Referenzelektrode 3 und die Gegenelektrode 2 sind gleichermaßen dem Gas ausgesetzt und bestehen aus einem inerten elektronischen Leiter. Die Meßelektrode 1 ist durch einen gasdichten Feststoff 13 verkapselt, der durch ein Loch 14 den Gasaustausch begrenzt. Der Feststoff 13 ist gasdicht mit dem Festelektrolyten 4 verbunden. Zwischen der Meßelektrode 1 und dem Feststoff 13 entsteht durch diesen Aufbau ein Hohlraum 15.

Damit der ermittelte Strom-Spannungs-Verlauf nur von den Partialdrücken der zu messenden Gaskomponenten bestimmt wird, muß der Sensor so gestaltet und betrieben werden, daß nicht dessen Leitfähigkeit den Meßeffekt verfälscht. Das bedeutet, die Geometrie des Festelektrolyten und seine Temperatur müssen so gewählt werden, daß seine Leitfähigkeit einen Strom erlaubt, der weit über dem des maximalen Meßstromes liegt. Ebenso muß die Größe der Gegenelektrode gegenüber der Meßelektrode so gewählt werden, daß die elektrochemisch wirksame Stromdichte (faradaysche Stromdichte) an der Gegenelektrode, auch bei hohen Gaskonzentrationen, kleiner ist als die elektrochemisch wirksame Stromdichte an der Meßelektrode.

Um die Temperaturabhängigkeit der Gasreaktionen, wie in FIG.1 gezeigt, zur Steigerung der Selektivität des Verfahrens auszunutzen, kann der Sensor mit einem Heiz- und Temperaturfühlelement versehen werden. Dadurch lassen sich einzelne Sensoren gleichzeitig auf verschiedenen Temperaturen nach dem oben beschriebenen Verfahren betreiben, deren Meßsignale miteinander verrechnet werden.

**Patentansprüche**

1. Verfahren zur Bestimmung von Gaskonzentrationen in einem Gasgemisch mit einem Gas-Sensor, bestehend aus einem Festelektrolyten,
   - der die nachzuweisenden Gaskomponenten nicht überführen oder aufnehmen kann,
   - auf dessen Oberfläche mindestens zwei Elektroden befestigt sind, von denen mindestens eine dem Gas ausgesetzt ist,
   - an zwei Elektroden, eine Meßelektrode (1) und eine Gegenelektrode (2), eine Spannung ($U_s$) angelegt wird, die sich aus einem statischen Spannungsanteil ($U_{dc}$) und einem zeitlich periodischen Spannungsanteil ($U_{ac}$) zusammensetzt,
   dadurch gekennzeichnet, daß
   - der Betrag des Integrals des positiven Meßstromes ($I^+$), d.h. wenn die Ionen von der Gegenelektrode (2) zur Meßelektrode (1) fließen, mit Hilfe des statischen Spannungsanteil ($U_{dc}$) und/oder des zeitlich periodischen Spannungsanteiles ($U_{ac}$) und/oder dessen Frequenz f auf einen konstanten Wert geregelt wird, der gleich oder kleiner ist dem Betrag des Integrals des negativen Meßstromes ($I^-$), d.h. wenn die Ionen in umgekehrter Richtung von der Meßelektrode (1) zur Gegenelektrode (2) fließen,
   - der statische Spannungsanteil ($U_{dc}$), der zeitlich periodische Spannungsanteil ($U_{ac}$) und dessen Frequenz f so gewählt werden, daß über eine Periode der Frequenz f der Betrag des Integrals des positiven Meßstromes ($I^+$) über eine Periode mit der Frequenz f, bezogen auf die Fläche der Meßelektrode (1), den Wert von $2*z*mAs/cm^2$ nicht überschreitet, wobei z die Anzahl der elektrischen Ladungen pro Ion und mAs die Ladungseinheit Milliampere-Sekunden bedeutet und
   - aus dem zwischen der Meßelektrode (1) und der Gegenelektrode (2) fließenden Meßstrom (I) die Gaskonzentrationen in Abhängigkeit von der angelegten Spannung ($U_s$) bestimmt werden.

2. Verfahren nach Anspruch 1, dadurch gekennzeichnet, daß die Gaskonzentrationen alternativ aus dem statischen Spannungsanteil ($U_{dc}$) und/oder dem zeitlich periodischen Spannungsanteil ($U_{ac}$) und/oder dessen Frequenz f bestimmt werden.

3. Verfahren nach Anspruch 1, dadurch gekennzeichnet, daß die Größe der an den beiden Elektroden (1,2) anliegenden Spannung ($U_s$) bezüglich einer dritten, stromlosen Elektrode, die Referenzelektrode (3) genannt wird, geregelt ist.

4. Verfahren nach Anspruch 3, dadurch gekennzeichnet, daß die Referenzelektrode (3) und die beiden Elektroden (1,2) auf der gleichen Seite des Festelektrolyten (4) angebracht sind.

5. Verfahren nach Anspruch 1, dadurch gekennzeichnet, daß der statische Spannungsanteil ($U_{dc}$) eingestellt wird, in dem der positive Meßstrom ($I^+$) oder der negative Meßstrom ($I^-$) während einer Periode mit der Frequenz f integriert wird und die aus dem Integral resultierende positive oder negative Ladung konstant gehalten wird.

6. Verfahren nach Anspruch 1, dadurch gekennzeichnet, daß die Frequenz f des zeitlich periodischen Spannungsanteiles ($U_{ac}$) eingestellt wird, in dem der positive Meßstrom ($I^+$) oder der negative Meßstrom ($I^-$) während einer Periode mit der Frequenz f über ein Zeitintervall, das kleiner oder gleich ist der Periodendauer mit der Frequenz f, integriert wird und die aus dem Integral resultierende positive oder negative Ladung konstant gehalten wird.

7. Verfahren nach Anspruch 1, dadurch gekennzeichnet, daß der zeitlich periodische Spannungsanteil ($U_{ac}$) eingestellt wird, in dem der positive Meßstrom ($I^+$) oder der negative Meßstrom ($I^-$) während einer Periode mit der Frequenz f über ein Zeitintervall, das kleiner oder gleich ist der Periodendauer mit der Frequenz f, integriert wird und die aus dem Integral resultierende positive oder negative Ladung konstant gehalten wird.

8. Verfahren nach Anspruch 1, dadurch gekennzeichnet, daß zur Erhöhung der Selektivität und der Empfindlichkeit der Messung dem zeitlich periodischen Spannungsteil ($U_{ac}$) eine Wechselspannung mit höherer Frequenz und kleinerer Amplitude als die des zeitabhängigen Spannungsanteiles ($U_{ac}$) überlagert und die zugehörige Stromänderung gemessen und ausgewertet wird.

9. Verfahren nach Anspruch 1, dadurch gekennzeichnet, daß zwei oder mehr Gas-Sensoren bei unterschiedlichen Temperaturen gleichzeitig betrieben werden, und deren Meßsignale miteinander verrechnet werden.

10. Gas-Sensor mit einem Festelektrolyten,
   - auf dessen Oberfläche eine Meßelektrode, eine Gegenelektrode und mindestens eine weitere Elektrode aufgebracht sind,
   - die weitere Elektrode als Referenzelektrode (3) aus einer gegenüber dem Gasgemisch inerten, auf den Festelektrolyten (4) aufgebrachten Metallelektrode besteht,
   - bei dem mit Hilfe einer potentiostatischen Verstärkerschaltung ein Strom von der Gegenelektrode zur Meßelektrode getrieben wird und
   - bei dem mit Hilfe der Verstärkerschaltung die Spannung ($U_s$) zwischen der Meßelektrode (1) und der weiteren Elektrode (3) gemessen wird,
   zur Durchführung des Verfahrens nach Anspruch 1, dadurch gekennzeichnet, daß
   - eine Regelvorrichtung vorgesehen ist, um den Betrag des Integrals des positiven Meßstromes (I+) unterhalb eines Wertes von $2*z*mAs/cm^2$ zu halten, wobei z die Anzahl der elektrischen Ladungen pro Ion und mAs die Ladungseinheit Milliampere-Sekunden bedeutet, und
   - ein Meßgerät zur Bestimmung des Meßstromes (I) vorgesehen ist.

11. Gas-Sensor nach Anspruch 10, gekennzeichnet durch
   einen gasdichten Hohlraum (7), der die Elektroden vor dem Gasgemisch schützt und der durch Aufsintern oder Anfügen von inertem Material (6) mit Glas oder Kunststoff (5) gebildet wird.

12. Gas-Sensor nach Anspruch 10 dadurch gekennzeichnet, daß
   die Referenzelektrode (3) und/oder die Gegenelektrode (2) aus einer inerten, auf den Festelektrolyten (4) aufgebrachten Metallelektrode besteht und ein Referenzgas über eine oder mehrere Kapillaren (9) dem Hohlraum (7) zugeführt wird.

13. Gas-Sensor nach Anspruch 10 und Anspruch 11, dadurch gekennzeichnet, daß
   - die Referenzelektrode (3) und/oder die Gegenelektrode (2), aus einer inerten, auf den Festelektrolyten (4) aufgebrachten Metallelektrode bestehen,
- ein sauerstoffionenleitendes Material (10) einen dem Gasgemisch nicht zugänglichen Hohlraum (12) über diesen Elektroden begrenzt, und
- auf der dem Gasgemisch und der dem Hohlraum (12) zugewandten Seite des sauerstoffionenleitenden Materials (10) Elektroden (11a,11b) aus inertem elektronenleitendem Material aufgebracht sind.

14. Gas-Sensor nach Anspruch 10, dadurch gekennzeichnet, daß
- zur Begrenzung des Gaszutrittes über der Meßelektrode (1) eine Verkapselung (13) angebracht ist, die über der Meßelektrode einen Hohlraum (15) bildet, und
- diese Verkapselung (13) eine Öffnung (14) besitzt, die den Zutritt des Gasgemisches in den Hohlraum (15) erlaubt.

15. Gas-Sensor nach Anspruch 10, dadurch gekennzeichnet, daß
im Verhältnis der Flächen von Gegenelektrode (2) und Meßelektrode (3) der positive Meßstrom (I+) pro Flächeneinheit der Gegenelektrode (2) kleiner als der positive Meßstrom (I+) pro Flächeneinheit der Meßelektrode (1) bemessen ist.


## Claims

1. A method of determining gas concentrations in a gas mixture by means of a sensor consisting of a solid electrolyte,
    - which is not able to transport or absorb the gas components to be detected,
    - to the surface of which at least two electrodes are attached, at least one of which is exposed to the gas,
    - a voltage ($U_s$), which is composed of a static voltage component ($U_{dc}$) and a voltage component which is periodic with respect to time ($U_{ac}$), is applied to two electrodes, a measuring electrode (1) and a counter electrode (2),
    characterised in that
    - the value of the integral of the positive measuring current ($I^+$), i.e. when ions flow from the counter electrode (2) to the measuring electrode (1), is controlled at a constant value by means of the static voltage component ($U_{dc}$) and/or the voltage component which is periodic with respect to time ($U_{ac}$) and/or the frequency of the latter, which constant value is less than or equal to the value of the integral of the negative measuring current ($I^-$), i.e. when ions flow in the opposite direction from the measuring electrode (1) to the counter electrode (2),
    - the static voltage component ($U_{dc}$), the voltage component which is periodic with respect to time ($U_{ac}$) and the frequency of the latter are selected so that over a cycle of frequency f the value of the integral of the positive measuring current ($I^+$) over a cycle of frequency f does not exceed the value $2*z*mAs/cm^2$, based on the area of the measuring electrode (1), wherein z denotes the number of electrical charges per ion and mAs denotes the charge unit milliampere-seconds, and
    - the gas concentrations are determined, depending on the applied voltage ($U_s$), from the measuring current (I) flowing between the measuring electrode (1) and the counter electrode (2).

2. A method according to claim 1, characterised in that the gas concentrations are determined alternatively from the static voltage component ($U_{dc}$) and/or from the voltage component which is periodic with respect to time ($U_{ac}$) and/or the frequency f of the latter.

3. A method according to claim 1, characterised in that the magnitude of the voltage ($U_s$) applied to the two electrodes (1, 2) is controlled in relation to a third, currentless electrode which is termed the reference electrode (3).

4. A method according to claim 3, characterised in that the reference electrode (3) and the two electrodes (1, 2) are provided on the same side of the solid electrolyte (4).

5. A method according to claim 1, characterised in that the static voltage component ($U_{dc}$) is adjusted in that the positive measuring current ($I^+$) or the negative measuring current ($I^-$) is integrated during a cycle of frequency f and the positive or negative charge resulting from the integral is held constant.

6. A method according to claim 1, characterised in that the frequency f of the voltage component which is periodic with respect to time ($U_{ac}$) is adjusted in that the positive measuring current ($I^+$) or the negative measuring current ($I^-$) is integrated during a cycle of frequency f over a time interval which is less than or equal to the length of the cycle of frequency f, and the positive or negative charge resulting from the integral is held constant.

7. A method according to claim 1, characterised in that the voltage component which is periodic with respect to time ($U_{ac}$) is adjusted in that the positive measuring current ($I^+$) or the negative measuring current ($I^-$) is integrated during a cycle of frequency f over a time interval which is less than or equal to the length of the cycle of frequency f, and the positive or negative charge resulting from the integral is held constant.

8. A method according to claim 1, characterised in that in order to increase the selectivity and the sensitivity of the measurement an alternating voltage of higher frequency and smaller amplitude than those of the voltage component which is periodic with respect to time ($U_{ac}$) is superimposed on the voltage component which is periodic with respect tot time ($U_{ac}$) and the associated change in current is measured and evaluated.

9. A method according to claim 1, characterised in that two or more gas sensors are operated simultaneously at different temperatures, and their measuring signals are offset against each other.

10. A gas sensor with a solid electrolyte,
    - on the surface of which a measuring electrode, a counter electrode and at least one additional electrode are deposited,
    - the additional electrode consists of a metal electrode, which is deposited on the solid electrolyte (4) and is inert to the gas mixture, as a reference electrode (3),
    - in which a current is passed from the counter electrode to the measuring electrode by means of a potentiostatic amplifier circuit, and
    - in which the voltage ($U_s$) between the measuring electrode (1) and the additional electrode (3) is measured by means of the amplifier circuit,
    for carrying out the method according to claim 1, characterised in that
    - a controller is provided in order to hold the value of the integral of the positive measuring current ($I^+$) below a value of $2*z*mAs/cm^2$, wherein z denotes the number of electrical charges per ion and mAs denotes the charge unit milliampere-seconds, and
    - a measuring device is provided for determining the measuring current (I).

11. A gas sensor according to claim 10, characterised by
    a gas-tight cavity (7) which protects the electrodes from the gas mixture and which is formed by the sintering-on or joining-on of inert material (6) by means of glass or plastic (5).

12. A gas sensor according to claim 10, characterised in that
    the reference electrode (3) and/or the counter electrode (2) consist of an inert metal electrode deposited on the solid electrolyte (4) and a reference gas is supplied to the cavity (7) via one or more capillaries (9).

13. A gas sensor according to claim 10 and claim 11, characterised in that
    - the reference electrode (3) and/or the counter electrode (2) consist of an inert metal electrode deposited on the solid electrolyte (4),
    - an oxygen ion-conducting material (10) delimits a cavity (12) above these electrodes which is not accessible to the gas mixture, and
    - electrodes (11a, 11b) of inert, electronically-conducting material are deposited on the side of the oxygen ion-conducting material (10) facing the gas mixture and on the side of the oxygen ion-conducting material facing the cavity (12).

14. A gas sensor according to claim 10, characterised in that
    - an encapsulation (13) is provided, which forms a cavity (15) above the measuring electrode (1) in order to restrict the entry of the gas above the measuring electrode (1), and
    - this encapsulation (13) has an opening (14) which permits the gas mixture to enter the cavity (15).

15. A gas sensor according to claim 10, characterised in that
    in relation to the areas of the counter electrode (2) and the measuring electrode (1) the positive measuring current ($I^+$) per unit area of the counter electrode (2) is designed to be less than the positive measuring current ($I^+$) per unit area of the measuring electrode (1).

**Revendications**

1.  Procédé pour déterminer les concentrations de gaz dans un mélange gazeux à l'aide d'un capteur de gaz, constitué d'un électrolyte solide,
    - qui ne peut pas recevoir ou transformer les composants de gaz à déceler,
    - sur la surface duquel sont fixées au moins deux électrodes, desquelles au moins une est exposée au gaz,
    - sur deux électrodes, une électrode de mesure (1) et une contre-électrode (2), est appliquée une tension ($U_S$) qui se compose d'une portion de tension statique ($U_{dc}$) et d'une portion de tension périodique dans le temps ($U_{ac}$),
    caractérisé en ce que :
    - la valeur de l'intégrale du courant de mesure positif ($I^+$), c'est-à-dire quand les ions s'écoulent de la contre-électrode (2) vers l'électrode de mesure (1), est réglée à une valeur constante, à l'aide de la portion de tension statique ($U_{dc}$) et/ou de la portion de tension périodique dans le temps ($U_{ac}$) et/ou de sa fréquence f, qui est inférieure ou égale à la valeur de l'intégrale du courant de mesure négatif ($I^-$), c'est-à-dire quand les ions s'écoulent, en sens inverse, de l'électrode de mesure (1) vers la contre-électrode (2),
    - la portion de tension statique ($U_{dc}$), la portion de tension périodique dans le temps ($U_{ac}$) et sa fréquence f sont choisies de sorte que, sur une période de la fréquence f, la valeur de l'intégrale du courant de mesure positif ($I^+$) sur une période à la fréquence f, relativement à la surface de l'électrode de mesure (1), ne dépasse pas la valeur de $2*z*mAs/cm^2$, z représentant le nombre des charges électriques par ion et mAs l'unité de charge milliampère-seconde, et
    - les concentrations de gaz sont déterminées à partir du courant de mesure (I) s'écoulant entre l'électrode de mesure (1) et la contre-électrode (2) de façon dépendant de la tension ($U_s$) appliquée.

2.  Procédé selon la revendication 1,
    caractérisé en ce que les concentrations de gaz sont déterminées, alternativement, à partir de la portion de tension statique ($U_{dc}$) et/ou de la portion de tension périodique dans le temps ($U_{ac}$) et/ou de sa fréquence f.

3.  Procédé selon la revendication 1,
    caractérisé en ce que la valeur de la tension ($U_S$) appliquée aux deux électrodes (1,2) est réglée relativement à une troisième électrode, sans courant, qui est dénommée électrode de référence (3).

4.  Procédé selon la revendication 3,
    caractérisé en ce que l'électrode de référence (3) et les deux électrodes (1,2) sont agencées sur le même côté de l'électrolyte solide (4).

5.  Procédé selon la revendication 1,
    caractérisé en ce que la portion de tension statique ($U_{dc}$) est réglée en ce que le courant de mesure positif ($I^+$) ou le courant de mesure négatif ($I^-$) est intégré pendant une période à la fréquence f et la charge positive ou négative résultant de l'intégrale est maintenue constante.

6.  Procédé selon la revendication 1,
    caractérisé en ce que la fréquence f de la portion de tension périodique dans le temps ($U_{ac}$) est réglée en ce que le courant de mesure positif ($I^+$) ou le courant de mesure négatif ($I^-$) est intégré pendant une période à la fréquence f sur un intervalle de temps qui est inférieur ou égal à la durée de la période à la fréquence f, et la charge positive ou négative résultant de l'intégrale est maintenue constante.

7.  Procédé selon la revendication 1,
    caractérisé en ce que la portion de tension périodique dans le temps ($U_{ac}$) est réglée en ce que le courant de mesure positif ($I^+$) ou le courant de mesure négatif ($I^-$) est intégré pendant une période à la fréquence f sur un intervalle de temps qui est inférieur ou égal à la durée de la période à la fréquence f, et la charge positive ou négative résultant de l'intégrale est maintenue constante.

**8.** Procédé selon la revendication 1,
caractérisé en ce que, pour augmenter la sélectivité et la sensibilité de la mesure, une tension alternative à fréquence plus élevée et amplitude plus petite que celles de la portion de tension dépendant du temps ($U_{ac}$), est superposée à la portion de tension périodique dans le temps ($U_{ac}$), et la variation de courant correspondante est mesurée et exploitée.

**9.** Procédé selon la revendication 1,
caractérisé en ce que deux ou plus capteurs de gaz sont utilisés simultanément pour des températures différentes, et leurs signaux de mesure sont calculés ensemble.

**10.** Capteur de gaz, comportant un électrolyte solide,
- sur la surface duquel sont agencées une électrode de mesure, une contre-électrode et au moins une autre électrode,
- l'autre électrode, en tant qu'électrode de référence (3), est constituée d'une électrode métallique appliquée sur l'électrolyte solide (4) et inerte vis-à-vis du mélange gazeux,
- dans lequel, à l'aide d'un circuit amplificateur potentiostatique, un courant est guidé de la contre-électrode vers l'électrode de mesure, et
- dans lequel, à l'aide du circuit amplificateur, la tension ($U_S$) entre l'électrode de mesure (1) et l'autre électrode (3) est mesurée,
pour la mise en oeuvre du procédé selon la revendication 1, caractérisé en ce que :
- un dispositif de réglage est prévu pour maintenir la valeur de l'intégrale du courant de mesure positif ($I^+$) au-dessous d'une valeur de $2*z*mAs/cm^2$, z représentant le nombre des charges électriques par ion et mAs l'unité de charge milliampère-seconde, et
- un appareil de mesure pour déterminer le courant de mesure (I) est prévu.

**11.** Capteur de gaz selon la revendication 10,
caractérisé par une cavité (7) étanche au gaz, qui protège les électrodes vis-à-vis du mélange gazeux et qui est formée par frittage ou adjonction d'une matière inerte (6) à du verre ou une matière synthétique (5).

**12.** Capteur de gaz selon la revendication 10,
caractérisé en ce que l'électrode de référence (3) et/ou la contre-électrode (2) sont constituées d'une électrode métallique inerte appliquée sur l'électrolyte solide (4) et un gaz de référence est amené à la cavité (7) par l'intermédiaire d'un ou plusieurs capillaires (9).

**13.** Capteur de gaz selon la revendication 10 et la revendication 11,
caractérisé en ce que :
- l'électrode de référence (3) et/ou la contre-électrode (2) sont constituées d'une électrode métallique inerte appliquée sur l'électrolyte solide (4),
- une matière (10) conductrice des ions oxygène limite une cavité (12) non accessible au mélange gazeux au-dessus de ces électrodes, et
- sur le côté en regard du mélange gazeux et celui en regard de la cavité (12), de la matière (10) conductrice des ions oxygène, sont appliquées des électrodes (11a, 11b) en une matière inerte conductrice des électrons.

**14.** Capteur de gaz selon la revendication 10,
caractérisé en ce que :
- pour limiter l'accès du gaz, un blindage (13) est appliqué sur l'électrode de mesure (1), lequel forme, sur l'électrode de mesure, une cavité (15), et
- ce blindage (13) présente une ouverture (14) qui permet l'entrée du mélange gazeux dans la cavité (15).

**15.** Capteur de gaz selon la revendication (10),
caractérisé en ce que, en proportion des surfaces de la contre-électrode (2) et de l'électrode de mesure (1), le courant de mesure positif ($I^+$) par unité de surface de la contre-électrode (2) est plus petit que le courant de mesure positif ($I^+$) par unité de surface de l'électrode de mesure (1).

FIG. 1

FIG. 2

FIG. 4

FIG. 5

FIG. 6

FIG. 7

FIG. 8

FIG. 3